# FASCICULE DE BREVET EUROPEEN

(11) **EP 4 069 944 B1**
(45) Date de publication et mention de la délivrance du brevet: **27.12.2023**
(21) Numéro de dépôt: 20820505.4
(22) Date de dépôt: 24.11.2020
(51) Int. Cl.: F01D 9/06, F01D 15/10, F02K 3/06

(54) **RACCORDEMENT ELECTRIQUE D'UNE MACHINE ELECTRIQUE DANS UNE TURBOMACHINE D'AERONEF**
ELEKTRISCHE VERBINDUNG EINER ELEKTRISCHEN MASCHINE IN EINEM FLUGZEUGTRIEBWERK
ELECTRICAL CONNECTION OF AN ELECTRICAL MACHINE IN AN AIRCRAFT TURBINE ENGINE

(30) Priorité: 03.12.2019 FR 1913669
(43) Date de publication de la demande: 12.10.2022
(73) Titulaire: SAFRAN AIRCRAFT ENGINES, 75015 Paris (FR)
(72) Inventeur: MILLIER, Vincent François Georges, 77550 MOISSY-CRAMAYEL (FR); GUILLOTEL, Loïc Paul Yves, 77550 MOISSY-CRAMAYEL (FR)
(74) Mandataire: Gevers & Orès
(86) Numéro de dépôt international: PCT/FR2020/052156
(87) Numéro de publication internationale: WO 2021/111058

(56) Documents cités:
- EP-A1- 3 246 528
- EP-A1- 3 412 575
- FR-A1- 2 842 565
- FR-A1- 2 896 537
- FR-A1- 2 922 265

## Description

### Domaine technique de l'invention

La présente invention concerne une turbomachine d'aéronef équipée d'une machine électrique ainsi qu'un procédé de maintenance de cette turbomachine.

### Arrière-plan technique

L'état de l'art comprend notamment les documents FR-A1-2 842 565, FR-A1-2 896 537 et FR-A1-2 922 265 qui décrivent des turbomachines équipées de machines électriques.

Le monde aéronautique se pose aujourd'hui de nombreuses questions quant à la pertinence d'utiliser des moteurs hybrides pour l'aviation commerciale. L'utilisation de l'énergie électrique est aujourd'hui envisagée non seulement pour répondre à des fonctions de l'aéronef mais également pour électrifier des fonctions de la turbomachine.

Ce constat conduit à étudier des solutions d'architecture moteur hybridée, combinant l'énergie fossile du carburant et l'énergie électrique pour assurer l'entraînement de la partie propulsive (soufflante de la turbomachine) et l'alimentation de certaines fonctions moteurs et/ou aéronef.

Ces architectures peuvent notamment se baser sur une architecture de type à grand taux de dilution et à réducteur, mais aussi à multiple corps (2 ou 3). Dans ces architectures, la turbomachine comprend un corps basse pression et un corps haute pression, chaque corps comportant un arbre reliant un rotor d'un compresseur à un rotor d'une turbine.

Il est connu d'équiper une turbomachine d'aéronef avec une machine électrique. On rappelle qu'une machine électrique est un dispositif électromécanique basé sur l'électromagnétisme permettant la conversion d'énergie électrique par exemple en travail ou énergie mécanique. Ce processus est réversible et peut servir à produire de l'électricité.

Ainsi, suivant l'usage final d'une machine, on utilise les termes de :
- générateur pour désigner une machine électrique produisant de l'énergie électrique à partir d'une énergie mécanique,
- moteur pour une machine électrique produisant une énergie mécanique à partir d'une énergie électrique.

Une machine électrique peut également se comporter en mode moteur comme en mode générateur.

L'intégration d'une machine électrique de forte puissance sur le corps basse pression d'une turbomachine, en particulier de type à grand taux de dilution, s'avère très complexe. Plusieurs zones d'installation sont possibles mais les avantages et les inconvénients de chacune sont nombreux et divers (problème d'intégration mécanique de la machine, tenue en température de la machine, accessibilité de la machine, etc.).

Une solution à ce problème consisterait à intégrer la machine électrique directement en aval de la soufflante de la turbomachine. Cependant, une difficulté serait le raccordement de cette machine au circuit électronique de puissance qui est en général situé à distance de la machine.

L'utilisation de harnais de puissance poserait quelques problèmes techniques dans cet environnement. Les harnais à fort diamètre ont des rayons de cintrage très importants, ce qui ne serait pas compatible avec cet environnement. L'intégration de harnais nécessiterait des supports afin de limiter la transmission de vibrations aux pièces environnantes et leur endommagement.

La présente invention propose une solution à au moins une partie des problèmes évoqués dans ce qui précède.

### Résumé de l'invention

L'invention propose une turbomachine d'aéronef, comportant :
- un générateur de gaz ayant un axe longitudinal,
- une soufflante située à une extrémité amont du générateur de gaz et configurée pour tourner autour dudit axe, et
- une machine électrique de forme générale annulaire qui est montée coaxialement en aval de la soufflante, et qui comprend un rotor couplé en rotation à la soufflante et un stator,

la soufflante étant configurée pour générer un flux principal de gaz dont une partie s'écoule dans une veine annulaire primaire du générateur de gaz pour former un flux primaire, et dont une autre partie s'écoule autour du générateur de gaz pour former un flux secondaire,
la veine primaire étant délimitée par une première et une deuxième enveloppes annulaires coaxiales du générateur de gaz, la veine primaire étant traversée par des bras, appelés bras IGV, de liaison des première et deuxième enveloppes, ainsi que par des bras tubulaires d'un carter d'entrée situé en aval des bras IGV,
le générateur de gaz comportant une troisième enveloppe annulaire qui entoure coaxialement la deuxième enveloppe, les deuxième et troisième enveloppes étant reliées ensemble à leurs extrémités amont pour former un bec annulaire de séparation des flux primaire et secondaire,
caractérisée en ce que le stator de la machine électrique est reliée à un circuit électronique de puissance par au moins une barre rigide électroconductrice, cette barre comportant une première partie s'étendant sensiblement radialement par rapport audit axe à l'intérieur d'un des bras IGV, et une seconde partie s'étendant sensiblement parallèlement audit axe entre les deuxième et troisième enveloppes.

La présente invention propose ainsi une solution d'intégration d'une machine électrique, un premier avantage étant lié au fait que dans la zone d'intégration de cette machine, idéalement directement en aval de la soufflante et donc en amont du ou des compresseurs, les températures qui y règnent sont relativement faibles et donc optimales pour cette machine. Le rotor de la machine est entraîné par la soufflante et est donc à une vitesse relativement faible en particulier si la turbomachine comporte un réducteur. De plus, la machine est située au plus près des veines d'écoulement des flux et a un diamètre relativement important et peut ainsi produire des puissances importantes par rapport aux machines des technologies antérieures.

Par ailleurs, la présente invention apporte une solution au problème de raccordement électrique de la machine dans cet environnement. Ce raccordement est assuré par une ou plusieurs barres rigides qui cheminent chacune à travers un bras IGV, c'est-à-dire au plus prés du bec de séparation des flux primaire et secondaire de la turbomachine.

La turbomachine selon l'invention peut comprendre une ou plusieurs des caractéristiques suivantes, prises isolément les unes des autres ou en combinaison les unes avec les autres :
- la barre a une forme générale en L, lesdites première et seconde parties étant sensiblement rectilignes et reliées entre elles par une jonction située directement en aval dudit bec de séparation ;
- la barre a une section polygonale et constante, et peut être vrillée ;
- la turbomachine comprend un carter de nacelle qui entoure le générateur de gaz, ainsi que des aubages, appelés OGV, de liaison du carter de nacelle à ladite troisième enveloppe annulaire ;
- le carter de nacelle définit une veine secondaire d'écoulement du flux secondaire autour du générateur de gaz ;
- les OGV sont situés en aval des bras IGV et sensiblement au droit des bras tubulaires du carter d'entrée ;
- ladite seconde partie s'étend sensiblement au droit d'un des OGV ;
- le générateur de gaz comprend des brides annulaires de fixation des OGV qui sont situées entre lesdites deuxième et troisième enveloppes et qui comprennent des encoches de passage de ladite seconde partie de la barre ;
- la barre est entourée par une gaine isolante et comprend une première extrémité mise à nue de fixation amovible à un élément de raccordement électrique audit stator, et une seconde extrémité mise à nue de fixation amovible à un harnais de raccordement électrique audit circuit ;
- la machine électrique est située en amont dudit bec de séparation ;
- le stator de la machine électrique est reliée au circuit électronique de puissance par plusieurs barres rigides électroconductrices régulièrement réparties autour dudit axe ;
- le bras IGV traversé par la barre est tubulaire et surdimensionné par rapport aux autres bras IGV ;
- ledit circuit de puissance est situé entre les deuxième et troisième enveloppes ; ledit harnais a une âme dont la section est identique à la section d'un corps de la barre ;
- la section de la barre, et en particulier de son corps, est constante sur toute la longueur de la barre.

La présente invention concerne encore un procédé de maintenance d'une turbomachine telle que décrite ci-dessus, comprenant les étapes consistant à:
- démonter et retirer au moins une partie de la troisième enveloppe, en particulier au niveau de ladite barre,
- démonter et retirer le OGV situé au droit de cette barre, et
- démonter et retirer la barre en vue de la maintenance.

### Brève description des figures

L'invention sera mieux comprise et d'autres détails, caractéristiques et avantages de l'invention apparaîtront à la lecture de la description suivante faite à titre d'exemple non limitatif en référence aux dessins annexés, dans lesquels :
[Fig.1] la figure 1 est une vue schématique en coupe axiale d'une turbomachine d'aéronef à fort taux de dilution et réducteur ;
[Fig.2] la figure 2 est une demi vue schématique partielle en coupe axiale d'une turbomachine d'aéronef selon l'invention équipée d'une machine électrique ;
[Fig.3] la figure 3 est similaire à la figure 2 et montre une barre de raccordement électrique d'un stator de la machine à un circuit électronique de puissance,
[Fig.4] la figure 4 est une vue schématique en perspective d'une partie de la turbomachine de la figure 2 et montre notamment des bras IGV dont un sert au passage de la barre de raccordement électrique,
[Fig.5] la figure 5 est une autre vue schématique en perspective d'une partie de la turbomachine de la figure 2 et montre notamment le cheminement de la barre de raccordement électrique,
[Fig.6a-6d] les figures 6a à 6d sont des vues d'un détail de la figure 3 et illustrent des étapes d'un procédé de maintenance de la turbomachine, [Fig.7] la figure 7 est une vue schématique en perspective d'une partie de la turbomachine de la figure 2 et illustre l'une des étapes du procédé de maintenance de la turbomachine,
[Fig.8] la figure 8 est une vue schématique en perspective et avec arrachement partiel d'une partie de la turbomachine de la figure 2 et montre notamment les bras IGV dont un sert au passage de la barre de raccordement électrique,
[Fig.9] la figure 9 est une vue schématique en coupe transversale d'un harnais électrique, et
[Fig.10] la figure 10 est une vue schématique en coupe transversale d'un mode de réalisation d'une barre de raccordement électrique.

### Description détaillée de l'invention

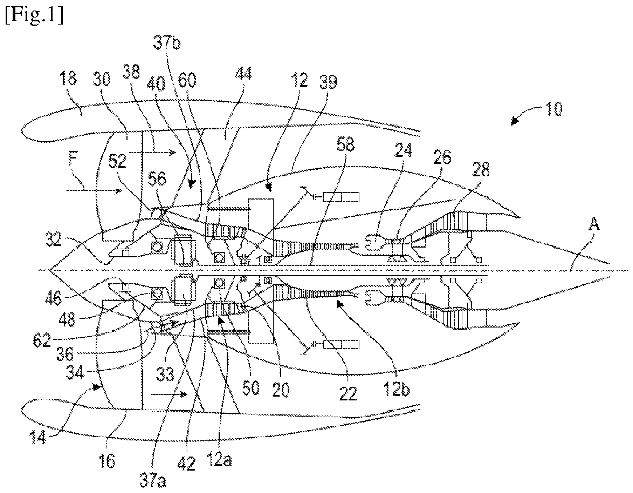

On se réfère d'abord à la figure 1 qui représente schématiquement une turbomachine 10 d'aéronef à double corps et double flux.

La turbomachine 10 comporte de façon classique un générateur de gaz 12 à l'amont duquel est disposée une soufflante 14. La soufflante 14 est entourée par un carter 16 qui est entouré par une nacelle 18 qui s'étend autour et le long d'une majeure partie du générateur de gaz 12.

Le générateur de gaz 12 comprend ici deux corps, à savoir un corps basse pression 12a ou BP et un corps haute pression 12b ou HP. Chaque corps comprend un compresseur et une turbine.

Les termes « amont » et « aval » sont considérés selon une direction principale F d'écoulement des gaz dans la turbomachine 10, cette direction F étant parallèle à l'axe longitudinal A de la turbomachine.

De l'amont vers l'aval, le générateur de gaz 12 comprend un compresseur basse pression 20, un compresseur haute pression 22, une chambre de combustion 24, une turbine haute pression 26 et une turbine basse pression 28.

La soufflante 14 comprend une rangée annulaire d'aubes 30 entraînée en rotation par un arbre de soufflante 32 qui est relié au rotor du corps basse pression 12a par l'intermédiaire d'un réducteur 33. Le flux de gaz qui traverse la soufflante (flèche F) est séparé à l'amont du générateur de gaz 12 par un bec annulaire 34 en un flux annulaire radialement interne, appelé flux primaire 36 qui s'écoule dans une veine annulaire primaire du générateur de gaz 12, et en un flux annulaire radialement externe, appelé flux secondaire 38 qui s'écoule dans une veine annulaire secondaire entre le générateur de gaz 12 et la nacelle 18 et fournit la majeure partie de la poussée de la turbomachine.

Un carter d'entrée 40 relie structurellement le générateur de gaz 12 au carter 16 et à la nacelle 18. Le carter d'entrée 40 comprend une rangée annulaire de bras 42 radialement internes s'étendant dans la veine d'écoulement du flux primaire 36, et une rangée annulaire d'aubages redresseurs 44, appelés OGV (acronyme de *Outer Gear Vane),* radialement externes s'étendant dans la veine d'écoulement du flux secondaire 38.

Les bras 42 sont en général en nombre limités (moins de dix) et sont tubulaires et traversés par des servitudes. Ces bras 42 ont un rôle structural car ils permettent la transmission d'efforts entre les supports paliers et les suspensions. Ils ont également un rôle de passage des servitudes, permettant de faire traverser les servitudes à travers la veine en les carénant, limitant ainsi les pertes aérodynamiques dans la veine. Ces bras n'ont pas de fonction de redressement de flux car ils n'ont pas de cambrure et ne sont pas en nombre suffisant pour réaliser cette fonction. Le nombre d'aubages redresseurs 44 (OGV) est en général supérieur à dix. Ils permettent de redresser le flux de la soufflante grâce à un nombre et une cambrure spécifiques. Ils ont également une fonction structurante car ils supportent le carter autour de la soufflante (carter de soufflante).

La veine d'écoulement du flux primaire 36 est en outre traversée par d'autres aubages redresseurs 52, appelés IGV (acronyme de *Inner Gear Vane).* Les IGV 52 sont régulièrement répartis autour de l'axe A et sont situés en amont du carter d'entrée 40 et plus exactement en amont des bras 42. Ces aubages permettent de redresser le flux provenant de la soufflante à son entrée dans la veine primaire. Ils n'ont pas de rôle structural. Ils sont en nombre suffisant (par exemple supérieur à 10) et avec une certaine cambrure pour redresser le flux de la soufflante pénétrant dans la veine primaire.

La veine d'écoulement du flux primaire 36 est délimitée par deux enveloppes annulaires coaxiales, respectivement interne 37a et externe 37b. Les IGV 52 et les bras 42, notamment, sont reliés à ces enveloppes 37a, 37b. La veine d'écoulement du flux secondaire 38 est délimitée intérieurement par une enveloppe annulaire 39 coaxiale aux enveloppes 37a, 37b, et extérieurement par le carter de nacelle 16. Les OGV 44 sont reliés aux enveloppes 37b, 39.

Chacune des enveloppes 37a, 37b, 39 peut être formée par plusieurs parois ou capots adjacents.

Le rotor du corps basse pression 12a ainsi que l'arbre de soufflante 32 sont guidés à l'amont par des paliers 46, 48 et 50. Ces paliers 46, 48, 50 sont du type à billes ou à rouleaux et comprennent chacun une bague interne montée sur l'arbre à guider, une bague externe portée par un support annulaire de paliers et un roulement entre les bagues.

De façon connue, le réducteur 33 est du type à train épicycloïdal et comprend un solaire centré sur l'axe A, une couronne s'étendant autour de l'axe, et des satellites qui engrènent avec le solaire et la couronne et sont portés par un porte-satellites.

Dans l'exemple représenté, la couronne est fixe et reliée fixement à un support 62 des paliers 46, 48. Le porte-satellites est tournant et accouplé à l'arbre de soufflante 32. Le solaire du réducteur est accouplé par un arbre d'entrée 56 à l'arbre principal 58 du corps basse pression.

L'arbre d'entrée 56 est guidé par le palier 50 qui est porté par un support de palier 60. L'arbre de soufflante 32 est guidé par les paliers 46, 48.

Les supports de paliers 60, 62 s'étendent autour de l'axe A et sont des pièces fixes reliées au stator et en particulier au carter d'entrée 40.

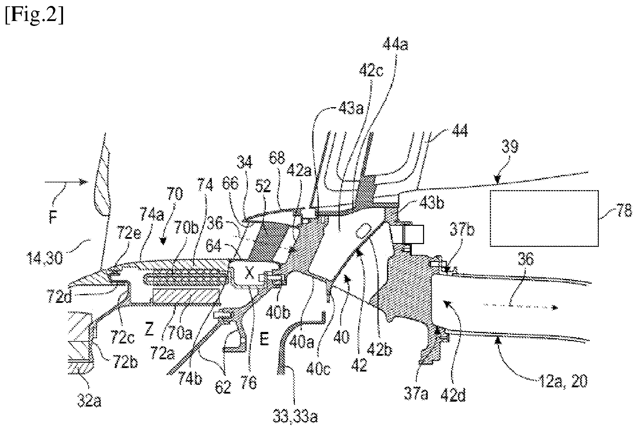

La figure 2 est une vue plus détaillée et à plus grande échelle d'une partie de la figure 1, et illustre un mode de réalisation d'une turbomachine selon l'invention.

Les éléments de la figure 2 qui ont déjà été décrits en référence à la figure 1 sont désignés par les mêmes références.

La figure 2 montre notamment la zone Z située entre le disque de soufflante 32a et le réducteur 33, dans laquelle une machine électrique 70 est installée. Seul un support 33a de la couronne du réducteur 33 est visible à la figure 2, cet élément étant par exemple relié au carter d'entrée 40 ou au support de palier 62.

La coupe du dessin de la figure 2 passe par un des IGV 52 qui peut être plein. Comme cela sera décrit plus en détail dans ce qui suit, au moins un ou certains IGV 52 sont toutefois tubulaires. Ce ou ces IGV spécifiques sont désignés par la référence 52a. Le but de cet IGV 52a est de faire un carénage qui limite les perturbations aérodynamiques et qui interagisse avec les autres IGV 52 pour faire redresseur.

La coupe passe par un OGV 44 ainsi que par un bras 42 qui est tubulaire pour le passage de servitudes, comme évoqué dans ce qui précède.

Chaque bras 42 comprend à l'amont un bord 42a et à l'aval un bord 42d, respectivement d'attaque et de fuite du flux primaire 36.

Chaque bras 42 comprend une cavité interne 42c qui est fermée radialement à l'extérieur par une paroi 44a du OGV 44. Cette paroi 44a est formée d'une seule pièce avec le OGV 44 et est fixée sur des brides annulaires, respectivement amont 43a et aval 43b, du carter d'entrée 40. La cavité 42c est isolée des servitudes par la paroi 42b.

La cavité interne 42c de chaque bras 42 est fermée radialement à l'intérieur par une paroi annulaire 40a du carter d'entrée 40. A l'extrémité amont de cette paroi 40a, le carter d'entrée 40 comprend une bride annulaire 40b radialement interne de fixation du support de palier 62. A l'extrémité aval de la paroi 40a, le carter d'entrée 40 comprend une bride annulaire 40c radialement interne de fixation, par exemple de fixation d'une gouttière annulaire de récupération d'huile projetée par le réducteur 33 par centrifugation.

Le réducteur 33 ainsi que les paliers 46, 48, 50 visibles à la figure 1 sont situés dans une enceinte annulaire de lubrification E qui est délimitée à l'amont par le support de palier 62 et au moins un joint d'étanchéité non visible, et à l'aval par le support de palier 60 et au moins un joint d'étanchéité non visible. La périphérie externe de l'enceinte E est fermée de manière étanche notamment par la paroi 40a.

La figure 2 permet de voir que l'enveloppe 37a évoquée dans ce qui précède est formée de plusieurs parois successives telles que la paroi 40a et une virole annulaire 64 située en amont de la paroi 40a et reliée à la périphérie interne des IGV 52.

L'enveloppe 37b est formée de plusieurs parois successives et notamment une virole annulaire 66 située en amont du carter d'entrée 40. Cette virole 66 s'étend autour de la virole 64 et est reliée à la périphérie externe des IGV 52.

L'enveloppe 39 est formée de plusieurs parois successives telles que la paroi 44a et une virole annulaire 68 située en amont de la paroi 44a. Cette virole 68 s'étend autour de la virole 66 et les extrémités amont des viroles 66, 68 sont reliées entre elles pour former le bec de séparation 34.

Comme évoqué dans ce qui précède, la machine électrique 70 est située dans une zone annulaire Z, cette zone Z étant ici délimitée à l'amont par la soufflante 14, et en particulier le disque 32 de liaison des aubes de soufflantes 30 à l'arbre de soufflante 32, et à l'aval par le support de palier 62.

La machine 70 a une forme générale annulaire et comprend un rotor 70a et un stator 70b. Le rotor 70a a une forme générale annulaire s'étendant autour de l'axe A et est porté par un élément de support 72 qui a lui-même une forme générale annulaire.

Dans l'exemple représenté, l'élément de support 72 comprend une paroi cylindrique 72a entourée par le rotor 70a et fixée à la périphérie interne de ce dernier. L'extrémité amont de cette paroi 72a et reliée d'une part à une bride annulaire radialement interne 72b de fixation au disque de soufflante 32a, et d'autre part à un rebord annulaire externe 72c.

Le rebord 72c comprend une surface cylindrique interne 72d d'appui sur une surface cylindrique externe de la soufflante 14 afin d'assurer le centrage du rotor 70a. Le rebord 72c comprend en outre des léchettes annulaires externes 72e d'un joint d'étanchéité du type à labyrinthe.

Le stator 70b a également une forme générale annulaire et est porté par un élément annulaire de support 74.

L'élément 74 comprend une surface annulaire externe 74a qui définit intérieurement la veine d'écoulement du flux de gaz F, entre la soufflante 14 et le bec de séparation 34. L'élément 74 est fixé à la périphérie externe du stator 70b et comprend une extrémité amont qui coopère, par exemple par l'intermédiaire d'un revêtement annulaire abradable, avec les léchettes 72e précitées.

L'extrémité aval de l'élément 74 est alignée axialement avec la virole 64 dont un bord périphérique amont est engagé axialement dans une gorge annulaire 74b de l'élément 74. Cette gorge 74b est orientée axialement vers l'aval. L'engagement du bord amont de la virole 64 dans la gorge 74b de l'élément 74 assure un recouvrement et évite ainsi une marche dans la veine qui perturberait le flux F.

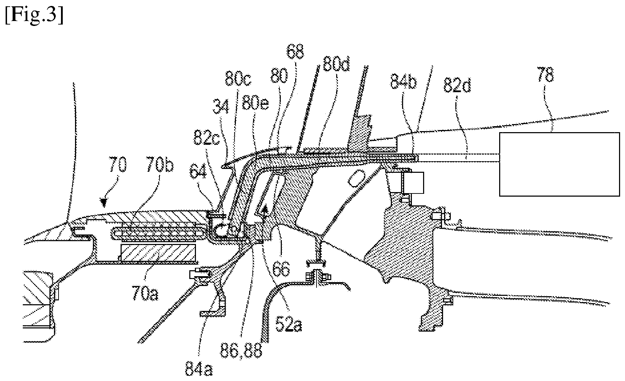

L'extrémité aval de l'élément 74 comprend en outre une bride annulaire 76 de fixation au support de palier 62 ou au carter d'entrée 40. Cette bride 76 a en section axiale une forme générale en U dont l'ouverture est orientée radialement vers l'extérieur. Cette bride 76 définit ainsi un espace annulaire X qui sert au raccordement électrique du stator 70b, comme cela sera décrit plus en détail ans ce qui suit en référence à la figure 3 notamment. Dans l'exemple représenté, la bride 76 est fixée par des vis à une bride du support de palier 62 et à la bride 40b du carter d'entrée.

L'élément 74 peut être formé d'une seule pièce, ou bien de deux pièces annulaires et coaxiales montées l'une autour de l'autre.

Une des particularités de cette installation réside dans le fait que la machine électrique 70 et en particulier son stator 70b est situé au plus prés du flux principal F après traversée de la soufflante 14. Ceci permet d'une part de disposer d'une machine électrique à grand diamètre et donc à puissance potentielle supérieure aux technologies proposées jusqu'ici, et d'une machine qui est refroidie par le flux F. Avantageusement, les réjections thermiques de la machine électrique sont dissipées grâce à ce refroidissement.

Pour cela, la surface 74a balayée par le flux F a de préférence un profil aérodynamique, comme représenté dans le dessin. L'élément 74 assure l'échange de calories par conduction thermique entre le stator 70b et le flux F.

Le stator 70b est relié par des moyens de raccordement électrique à un circuit électronique de puissance 78 qui est situé entre les deux enveloppes 37b, 39 et donc autour du générateur de gaz 12.

Les figures 3 à 5 illustrent un mode de réalisation de ces moyens de raccordement électrique qui incluent une barre rigide 80.

Bien qu'un ou plusieurs harnais électriques puissent en outre être utilisés pour le raccordement électrique du stator 70b, au moins une barre rigide 80 est utilisée, ce qui apporte de nombreux avantages.

Dans un exemple préféré de réalisation de l'invention, le stator 70b est raccordé par un premier harnais électrique 82c à une extrémité de la barre 80 dont l'extrémité opposée est raccordée par un second harnais électrique 82d au circuit 78. Dans ce cas, la section de l'âme 82a de chaque harnais 82c, 82d est de préférence identique ou proche de la section du corps 80a de la barre 80. La section de la barre 80 et en particulier de son corps 80a est de préférence constante sur toute la longueur de la barre.

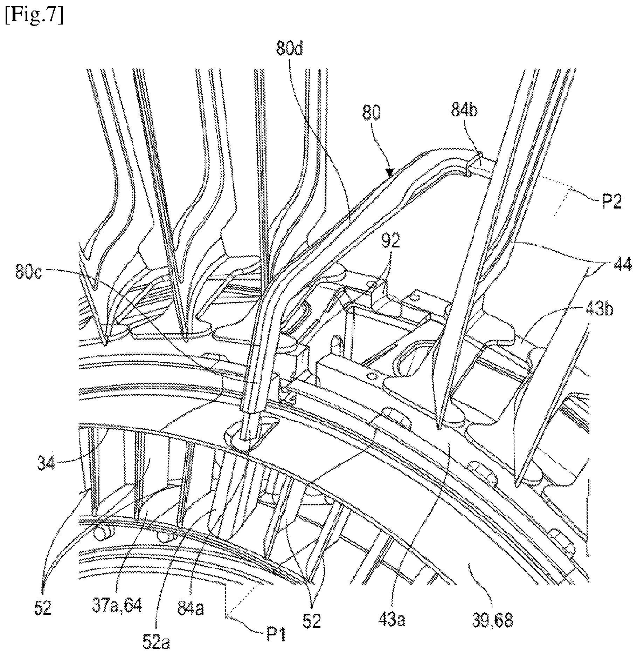

La barre 80, visible dans son intégralité à la figure 7, est conformée pour cheminer depuis la zone Z jusqu'au circuit 78. Elle peut avoir une forme générale complexe par exemple en L, S, Z, etc.

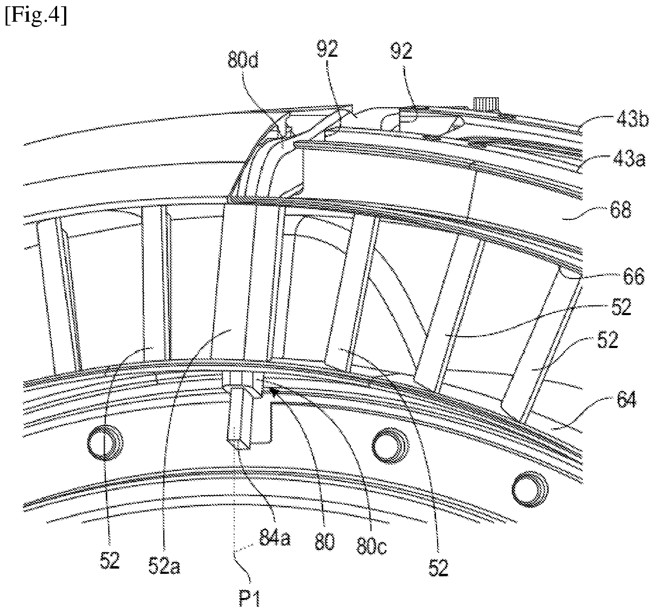

La barre 80 comprend des extrémités, respectivement amont 84a et aval 84b, qui sont mises à nue, c'est-à-dire qui ne sont pas recouvertes par la gaine 80b, afin de pouvoir raccorder la barre 80 aux harnais 82c, 82d (figures 4, 5 et 7).

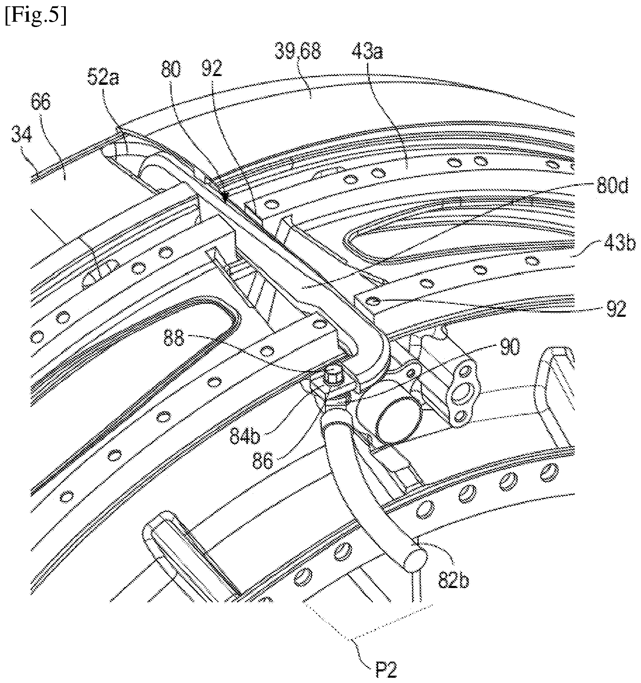

Chacune des ses extrémités 84a, 84b comprend un orifice 86 de montage d'un boulon 88 (vis et écrou, voire également rondelle). Ce boulon 88 sert à fixer une extrémité 84a, 84b de la barre 80 au harnais 82c, 82d correspondant, de préférence par l'intermédiaire d'une cosse 90. La cosse est raccordée à une extrémité du harnais et comprend une plaque destinée à être appliquée sur l'extrémité 84a, 84b correspondante et à y être serrée et fixée par l'intermédiaire du boulon 88 (figure 5).

La barre 80 peut être vrillée, comme dans l'exemple représenté (figure 7), la barre comportant alors une de ses extrémités 84a qui s'étend dans un plan P1 (le plan P1 de la figure 4 passe par l'axe A de la turbomachine) et l'autre de ses extrémités 84b qui s'étend dans un plan P2 perpendiculaire au plan P1 (le plan P2 est sensiblement tangent à une circonférence centrée sur l'axe A - figures 5 et 7).

L'invention propose un cheminement particulier de la barre 80 depuis le stator 70b jusqu'au circuit 78, et plus particulièrement entre les harnais 82c, 82d. A noter qu'en pratique, le stator 70b peut être relié par plusieurs barres 80 au circuit 78. Ces barres 80 sont alors de préférence régulièrement réparties autour de l'axe A et reliées chacune par des harnais 82c, 82d au stator 70b et au circuit 78. La description qui suite faite pour une barre 80 s'applique donc pour chaque barre de raccordement électrique du stator de la machine électrique au circuit électronique de puissance.

Dans le mode de réalisation représenté aux figures 3 à 8, la barre 80 chemine à travers un des IGV 52 qui est tubulaire, puis le long de l'axe A et d'un OGV 44.

La barre 80 a ainsi une forme générale en L et comprend une première partie 80c s'étendant sensiblement radialement par rapport à l'axe A à l'intérieur du IGV 52, et une seconde partie 80b s'étendant sensiblement parallèlement à l'axe A entre les enveloppes 37b, 39, et sensiblement au droit du OGV 44 précité.

Les parties 80c, 80d sont sensiblement rectilignes et reliées entre elles par une jonction 80e coudée située directement en aval du bec de séparation 34, entre les viroles 66, 68. Dans la mesure où, comme dans l'exemple représenté, le IGV 52 peut être incliné d'amont en aval vers l'extérieur, la première partie 80c peut avoir une inclinaison similaire.

La figure 3 permet de voir que l'extrémité 84a est située dans l'espace X précité et raccordée par le boulon 88 au harnais 82c dans cet espace X. On comprend donc que la barre 80 et en particulier sa partie 80c traverse la virole 64 puis chemine à travers le IGV 52.

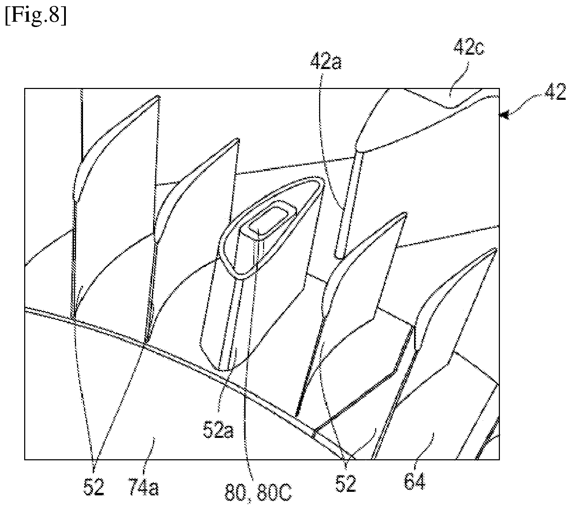

Les figures 4 et 8 permettent de constater que le IGV 52a de passage de la barre 80 est surdimensionné, ce surdimensionnement étant essentiellement dû à la présence de la cavité interne du bras. On comprend que le nombre de IGV 52a surdimensionnés dépendra du nombre de barres 80 de raccordement électrique de la machine 70 au circuit 78, chaque barre 80 traversant un de ces bras surdimensionnés.

Les figures 4, 5 et 7 permettent de constater que la partie 80d de la barre 80 traverse des encoches 92 des brides 43a, 43b. Il s'agit d'encoches axiales 92 formées à la périphérie externe des brides 43a, 43b de fixation du OGV 44 et conformées pour que la barre 80 puisse cheminer à travers ces encoches 92 sans gêner la fixation du bras 44 sur les brides 43a, 43b.

La figure 5 permet en outre de voir que l'extrémité 84b est recourbée en aval de la bride 43b pour être orientée sensiblement parallèlement à cette bride.

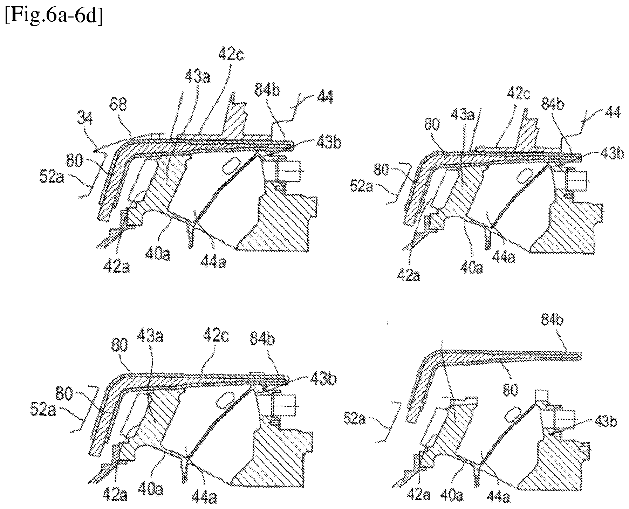

Les figures 6a à 6d et 7 illustrent des étapes d'un procédé de maintenance de la turbomachine 10.

Dans l'ordre représenté des étapes illustrées aux figures 6a à 6d, ces étapes permettent un démontage de la barre 80. On comprend qu'il suffit de répéter ces étapes dans l'ordre inverse pour réaliser un montage ou remontage de la barre 80.

A la première étape illustrée aux figures 6a et 6b, au moins une partie de la troisième enveloppe 39 est démontée et retirée, en particulier au niveau de la barre 80. Il s'agit donc de démonter et retirer la virole 68. Avantageusement, cette virole 68 est sectorisée et seulement un secteur angulaire de cette virole 68 est retiré, comme illustré aux figures 4 et 5. En variante, l'intégralité de la virole 68 est retirée, comme représenté à la figure 7.

Une autre étape représentée aux figures 6b et 6c consiste à démonter et retirer le OGV 44 situé au droit de la barre 80. Cette étape est également illustrée à la figure 7 où l'un des OGV 44 est absent.

Une autre étape consiste alors à désolidariser les extrémités 84a, 84b de la barre, des harnais 82c, 82d. La barre 80 est alors démontée et peut être retirée, comme illustrée aux figures 6d et 7.

Un exemple de cet IGV 52a qui limite les perturbations aérodynamiques et qui interagit avec les IGV voisins pour faire redresseur est illustré à la figure 8, le IGV 52a comprend par exemple : un bord d'attaque décalé axialement par rapport au bord de fuite selon un décalage similaire à un IGV 52 voisin et/ou un extrados qui présente une cambrure plus importante qu'un IGV 52 voisin.

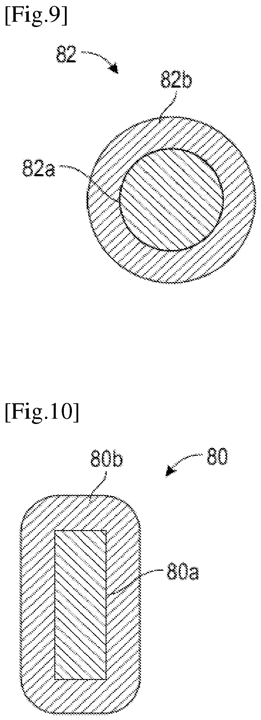

La figure 9 montre une coupe d'un harnais électrique 82 qui a en général une forme générale circulaire et comprend une âme 82a conductrice formée par un toron de câbles et une gaine externe 82b isolante. La figure 10 montre un exemple de réalisation d'une barre 80, qui comprend un corps conducteur 80a ayant de préférence une forme polygonale et par exemple rectangulaire en section. La barre 80 comprend en outre une gaine externe 80b isolante.

La présente invention permet de nombreux avantages :
- la barre 80 permet, à l'opposé d'un harnais, des rayons de cintrage très courts, ce qui, dans l'environnement concerné, est primordial ; ceci permet de limiter l'épaisseur du bec de séparation 34 à une épaisseur proche de celle de la barre 80. La barre 80 a sa section rectangulaire orientée dans le plan P2 pour présenter une épaisseur radiale faible dans la partie 84b. La barre 80 est vrillée en partie 80d au niveau de la traversée du carter d'entrée 40 entre deux OGV 44 pour qu'en partie 80c sa section rectangulaire soit orientée selon le plan P1 et présenter une faible épaisseur transversale et s'étendre dans la direction axiale puis dans la direction radiale dans sa partie 80c afin de rentrer dans le IGV 52a ;
- la barre 80 est rigide, il n'y a donc pas de risque de vibrations dues à une trop grande souplesse donc pas besoin de maintien spécifique dans les bras du carter d'entrée 40 ;
- le cheminement décrit plus haut est compatible de toutes les servitudes huile circulant dans les bras du carter d'entrée 40 ; de plus, les parois du carter d'entrée 40, et en particulier les parois 40a et 42b, isolent la barre 80 de ces servitudes huiles, ce qui limite le risque de feu ; et
- la modularité liée à la facilité de montage/démontage de la barre 80 en enlevant seulement quelques pièces de la turbomachine.

Cette invention pourrait être appliquée à toute turbomachine équipée d'une machine électrique en amont d'un carter structural du type carter d'entrée ou autre.

## Revendications

1. Turbomachine (10) d'aéronef, comportant :
- un générateur de gaz (12) ayant un axe longitudinal (A),
- une soufflante (14) située à une extrémité amont du générateur de gaz et configurée pour tourner autour dudit axe et
- une machine électrique (70) de forme générale annulaire qui est montée coaxialement en aval de la soufflante, et qui comprend un rotor (70a) couplé en rotation à la soufflante, et un stator (70b),
la soufflante étant configurée pour générer un flux principal de gaz (F) dont une partie s'écoule dans une veine annulaire primaire du générateur de gaz pour former un flux primaire (36), et dont une autre partie s'écoule autour du générateur de gaz pour former un flux secondaire (38),
la veine primaire étant délimitée par une première et une deuxième enveloppes annulaires (37a, 37b) coaxiales du générateur de gaz, la veine primaire étant traversée par des aubages, appelés IGV (52), de liaison des première et deuxième enveloppes, ainsi que par des bras tubulaires (42) d'un carter d'entrée situé en aval des bras IGV,
le générateur de gaz comportant une troisième enveloppe annulaire (39) qui entoure coaxialement la deuxième enveloppe, les deuxième et troisième enveloppes (37b, 39) étant reliées ensemble à leurs extrémités amont pour former un bec annulaire (34) de séparation des flux primaire et secondaire (36, 38),
**caractérisée en ce que** le stator (70b) de la machine électrique (70) est reliée à un circuit électronique de puissance (78) par au moins une barre rigide électroconductrice (80), cette barre comportant une première partie (80c) s'étendant sensiblement radialement par rapport audit axe à l'intérieur d'un des bras IGV (52a), et une seconde partie (80d) s'étendant sensiblement parallèlement audit axe entre les deuxième et troisième enveloppes (37b, 39).

2. Turbomachine (10) selon la revendication 1, dans laquelle la barre (80) a une forme générale en L, lesdites première et seconde parties (80c, 80d) étant sensiblement rectilignes et reliées entre elles par une jonction (80e) située directement en aval dudit bec de séparation (34).

3. Turbomachine (10) selon la revendication 1 ou 2, dans laquelle la barre (80) a une section polygonale et constante, et peut être vrillée.

4. Turbomachine (10) selon l'une des revendications précédentes, dans laquelle elle comprend un carter de nacelle (16) qui entoure le générateur de gaz (12), ainsi que des aubages, appelés OGV (44), de liaison du carter de nacelle à ladite troisième enveloppe annulaire (39).

5. Turbomachine (10) selon la revendication précédente, dans laquelle le générateur de gaz (12) comprend des brides annulaires (43a, 43b) de fixation des OGV (44) qui sont situées entre lesdites deuxième et troisième enveloppes (37b, 39) et qui comprennent des encoches (92) de passage de ladite seconde partie (80d) de la barre (80).

6. Turbomachine (10) selon l'une des revendications précédentes, dans laquelle la barre (80) est entourée par une gaine isolante (80b) et comprend une première extrémité (84a) mise à nue de fixation amovible à un élément de raccordement électrique audit stator (70b), et une seconde extrémité (84b) mise à nue de fixation amovible à un harnais (82b) de raccordement électrique audit circuit (78).

7. Turbomachine (10) selon l'une des revendications précédentes, dans laquelle la machine électrique (70) est située en amont dudit bec de séparation (34).

8. Turbomachine (10) selon l'une des revendications précédentes, dans laquelle le stator (70b) de la machine électrique (70) est relié au circuit électronique de puissance (78) par plusieurs barres rigides électroconductrices (78) régulièrement réparties autour dudit axe (A).

9. Turbomachine (10) selon l'une des revendications précédentes, dans laquelle le IGV (52a) traversé par la barre (80) est tubulaire et surdimensionné par rapport aux autres bras IGV.

10. Turbomachine (10) selon l'une des revendications précédentes, dans laquelle ledit circuit de puissance (78) est situé entre les deuxième et troisième enveloppes (37b, 39).

11. Procédé de maintenance d'une turbomachine (10) selon l'une des revendications précédentes, comprenant les étapes consistant à :
- démonter et retirer au moins une partie de la troisième enveloppe (39), en particulier au niveau de ladite barre (80),
- démonter et retirer le OGV (44) situé au droit de cette barre, et
- démonter et retirer la barre (80) en vue de la maintenance.

## Patentansprüche

1. Turbomaschine (10) eines Luftfahrzeugs, umfassend:
- einen Gasgenerator (12), der eine Längsachse (A) aufweist,
- ein Gebläse (14), das sich an einem stromaufwärtigen Ende des Gasgenerators befindet und zum Drehen um die Achse konfiguriert ist, und
- eine allgemein ringförmige elektrische Maschine (70), die koaxial stromabwärts des Gebläses angebracht ist und die einen Rotor (70a), der mit dem Gebläse drehgekoppelt ist, und einen Stator (70b) umfasst,
wobei das Gebläse konfiguriert ist, um einen Hauptgasstrom (F) zu erzeugen, von dem ein Teil in einen ringförmigen Primärstrom des Gasgenerators strömt, um einen Primärstrom (36) zu bilden, und von dem ein anderer Teil um den Gasgenerator strömt, um einen Sekundärstrom (38) zu bilden, wobei der Primärstrom durch eine erste und eine zweite ringförmige Hülle (37a, 37b) begrenzt ist, die koaxial zum Gasgenerator sind, wobei der Primärstrom von Schaufeln, als IGV (52) bezeichnet, zur Verbindung der ersten und der zweiten Hülle sowie von rohrförmigen Armen (42) eines Eingangsgehäuses, das sich stromabwärts der IGV-Arme befindet, durchquert wird,
wobei der Gasgenerator eine dritte ringförmige Hülle (39) umfasst, die die zweite Hülle koaxial umgibt, wobei die zweite und die dritte Hülle (37b, 39) an ihren stromaufwärtigen Enden miteinander verbunden sind, um einen ringförmigen Schnabel (34) zur Trennung des Primär- und Sekundärstroms (36, 38) zu bilden,
**dadurch gekennzeichnet, dass** der Stator (70b) der elektrischen Maschine (70) über mindestens eine starre elektrisch leitende Leiste (80) mit einer elektronischen Leistungsschaltung (78) verbunden ist, wobei diese Leiste ein erstes Teil (80c), das sich in Bezug auf die Achse im Inneren eines der IGV-Arme (52a) im Wesentlichen radial erstreckt, und ein zweites Teil (80d) umfasst, das sich im Wesentlichen parallel zur Achse zwischen der zweiten und der dritten Hülle (37b, 39) erstreckt.

2. Turbomaschine (10) nach Anspruch 1, wobei die Leiste (80) eine allgemeine L-Form aufweist, wobei das erste und das zweite Teil (80c, 80d) im Wesentlichen geradlinig sind und über eine unmittelbar stromabwärts des Trennschnabels (34) gelegene Verbindung (80e) miteinander verbunden sind.

3. Turbomaschine (10) nach Anspruch 1 oder 2, wobei die Leiste (80) einen polygonalen und konstanten Querschnitt aufweist und verdreht werden kann.

4. Turbomaschine (10) nach einem der vorstehenden Ansprüche, wobei sie ein Gondelgehäuse (16) umfasst, das den Gasgenerator (12) umgibt, sowie Schaufeln, als OGV (44) bezeichnet, zur Verbindung des Gondelgehäuses mit der dritten ringförmigen Hülle (39).

5. Turbomaschine (10) nach dem vorstehenden Anspruch, wobei der Gasgenerator (12) ringförmige Flansche (43a, 43b) zur Befestigung der OGV (44) umfasst, die sich zwischen der zweiten und der dritten Hülle (37b, 39) befinden und die Einkerbungen (92) zum Durchlassen des zweiten Teils (80d) der Leiste (80) umfassen.

6. Turbomaschine (10) nach einem der vorstehenden Ansprüche, wobei die Leiste (80) von einer isolierenden Ummantelung (80b) umgeben ist und ein erstes freiliegendes Ende (84a) zur abnehmbaren Befestigung an einem Element zum elektrischen Anschluss an den Stator (70b) und ein zweites freiliegendes Ende (84b) zur abnehmbaren Befestigung an einem Gurt (82b) zum elektrischen Anschluss an die Schaltung (78) umfasst.

7. Turbomaschine (10) nach einem der vorstehenden Ansprüche, wobei sich die elektrische Maschine (70) stromaufwärts des Trennschnabels (34) befindet.

8. Turbomaschine (10) nach einem der vorstehenden Ansprüche, wobei der Stator (70b) der elektrischen Maschine (70) über mehrere starre elektrisch leitende Leisten (78), die regelmäßig um die Achse (A) verteilt sind, mit der elektronischen Leistungsschaltung (78) verbunden ist.

9. Turbomaschine (10) nach einem der vorstehenden Ansprüche, wobei der von der Leiste (80) durchquerte IGV (52a) rohrförmig und in Bezug auf die anderen IGV-Arme überdimensioniert ist.

10. Turbomaschine (10) nach einem der vorstehenden Ansprüche, wobei sich die Leistungsschaltung (78) zwischen der zweiten und der dritten Hülle (37b, 39) befindet.

11. Verfahren zur Wartung einer Turbomaschine (10) nach einem der vorstehenden Ansprüche, umfassend die Schritte, die bestehen aus:
- Ausbauen und Entnehmen mindestens eines Teils der dritten Hülle (39), insbesondere an der Leiste (80),
- Ausbauen und Entnehmen des OGV (44), der sich senkrecht über dieser Leiste befindet, und
- Ausbauen und Entnehmen der Leiste (80) im Hinblick auf die Wartung.

## Claims

1. An aircraft turbomachine (10), comprising:
- a gas generator (12) having a longitudinal axis (A),
- a fan (14) located at an upstream end of the gas generator and configured to rotate about said axis, and
- an electric machine (70) of generally annular shape which is mounted coaxially downstream of the fan, and which comprises a rotor (70a) rotatably coupled to the fan, and a stator (70b),
the fan being configured to generate a main gas flow (F), a portion of which flows into a primary annular duct of the gas generator to form a primary flow (36), and another portion of which flows around the gas generator to form a secondary flow (38),
the primary duct being delimited by a first and a second annular envelopes (37a, 37b) coaxial with the gas generator, the primary duct being passed through by bladings, referred to as IGV (52), for connecting the first and second envelopes, as well as by tubular arms (42) of an inlet casing located downstream of the IGV arms,
the gas generator comprising a third annular envelope (39) which coaxially surrounds the second envelope, the second and third envelopes (37b, 39) being connected together at their upstream ends to form an annular splitter nose (34) for separating the primary and secondary flows (36, 38),
**characterised in that** the stator (70b) of the electric machine (70) is connected to a power electronic circuit (78) by at least one rigid electroconductive bar (80), this bar comprising a first portion (80c) extending substantially radially with respect to said axis inside one of the IGV arms (52a), and a second portion (80d) extending substantially parallel to said axis between the second and third envelopes (37b, 39).

2. The turbomachine (10) of claim 1, wherein the bar (80) is generally L-shaped, said first and second portions (80c, 80d) being substantially straight and connected together by a junction (80e) located directly downstream of said splitter nose (34).

3. The turbomachine (10) of claim 1 or 2, wherein the bar (80) has a polygonal and constant cross-section, and can be twisted.

4. The turbomachine (10) according to any of the preceding claims, wherein it comprises a nacelle casing (16) that surrounds the gas generator (12), as well as bladings, referred to as OGV (44), for connecting the nacelle casing to said third annular envelope (39).

5. The turbomachine (10) according to the preceding claim, wherein the gas generator (12) comprises annular flanges (43a, 43b) for attaching the OGV (44) which are located between said second and third envelopes (37b, 39) and which comprise notches (92) for the passage of said second portion (80d) of the bar (80).

6. The turbomachine (10) according to any of the preceding claims, wherein the bar (80) is surrounded by an insulating sheath (80b) and comprises a first end (84a) exposed for releasable attachment to an element for electric connection to said stator (70b), and a second end (84b) exposed for releasable attachment to a harness (82b) for electric connection to said circuit (78).

7. The turbomachine (10) according to any of the preceding claims, wherein the electric machine (70) is located upstream of said splitter nose (34).

8. The turbomachine (10) according to one of the preceding claims, wherein the stator (70b) of the electric machine (70) is connected to the power electronic circuit (78) by a plurality of rigid electroconductive bars (78) regularly distributed around said axis (A).

9. The turbomachine (10) according to any of the preceding claims, wherein the IGV (52a) through which the bar (80) passes is tubular and oversized relative to the other IGV arms.

10. The turbomachine (10) according to any of the preceding claims, wherein said power circuit (78) is located between the second and third envelopes (37b, 39).

11. A method for maintaining a turbomachine (10) according to any of the preceding claims, comprising the steps consisting in:
- disassembling and removing at least one portion of the third envelope (39), in particular at the level of said bar (80),
- disassembling and removing the OGV (44) located in line with this bar, and
- disassembling and removing the bar (80) for maintenance.
